# DEMANDE DE BREVET EUROPEEN

(11) **EP 0 907 070 A1**
(43) Date de publication de la demande: **07.04.1999**
(21) Numéro de dépôt: 97420177.4
(22) Date de dépôt: 01.10.1997
(51) Int. Cl.: G01F 23/24

(54) **Capteur de niveau de liquide, notamment pour une installation de refroidissement du moteur thermique d'un véhicule automobile**

(71) Demandeur: G. Cartier Electronique, 74300 Cluses (FR)
(72) Inventeur: Renard Alain, 45190 Villorceau (FR); Patterlini Maurice, 45160 Olivet (FR); Ledermann Gilbert, 79777 Berau (DE)
(74) Mandataire: Poncet, Jean-François

(57) **Abrégé**

La présente invention concerne un capteur de liquide du type comportant au moins deux électrodes (21, 22) sensiblement parallèles pénétrant dans une cavité contenant du liquide de refroidissement en situation normale, et un circuit électronique propre à faire circuler un signal électrique entre lesdites électrodes de manière à réaliser un capteur de continuité. Le capteur comprend des moyens tels qu'une gaine isolante (60) convexe pour empêcher la formation d'une goutte de liquide entre les portions conductrices apparentes (63, 64) des électrodes lorsque la cavité se vide de son liquide, notamment brutalement.

Application pour une installation de refroidissement du moteur thermique d'un véhicule automobile.

## Description

La présente invention concerne un capteur de niveau de liquide, notamment pour une installation de refroidissement du moteur thermique d'un véhicule automobile.

Un tel capteur permet de vérifier la présence de liquide de refroidissement dans le radiateur de refroidissement d'un véhicule automobile, et de provoguer l'allumage d'un témoin lumineux sur le tableau de bord afin d'alerter le conducteur en cas d'absence ou de niveau insuffisant du liquide. Il comprend classiquement une sonde formée de deux électrodes parallèles rapprochées, plongeant verticalement par exemple dans le vase d'expansion du radiateur, entre lesquelles on fait circuler un signal électrique.

Tant que le liquide, qui est conducteur, baigne les deux électrodes, le signal peut circuler d'une électrode à l'autre. En cas de baisse du niveau du liquide en dessous de l'extrémité inférieure des électrodes, le passage du signal entre les électrodes est interrompu.

Un circuit électronique simple commande l'émission du signal dans la sonde et permet de distinguer les deux situations ci-dessus, pour réaliser un capteur de continuité.

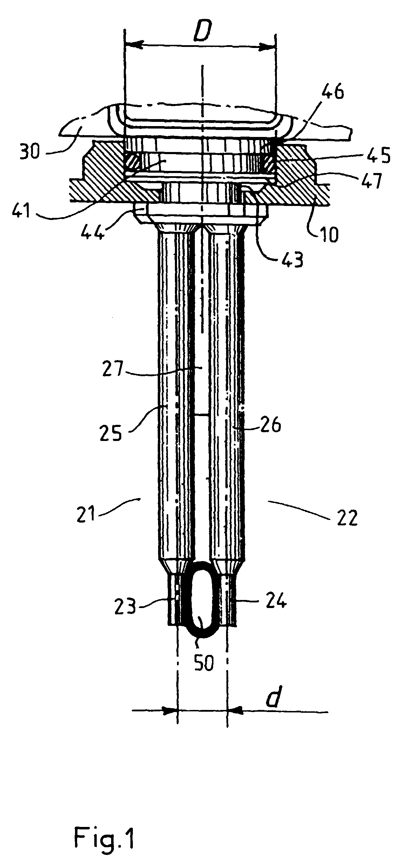

A la figure 1, on a représenté une vue partielle d'un capteur de niveau de liquide conforme à l'art antérieur, avec, en coupe partielle le détail de ses moyens de montage et de fixation sur une paroi supérieure 10 du vase d'expansion du radiateur.

Une partie principale 30 formant boîtier pour contenir le circuit électronique du capteur, partiellement représentée à la figure 1, est prolongée par deux électrodes 21 et 22, ladite partie principale et lesdites électrodes étant séparées par les moyens de montage et de fixation du capteur sur la paroi 10 du vase d'expansion du radiateur. Ces moyens seront décrits plus en détail dans la description qui va suivre.

Les électrodes 21 et 22 comprennent deux conducteurs ou tiges conductrices, respectivement 23 et 24, réalisés dans un alliage de cuivre et de zinc et dont les extrémités sont étamées pour les rendre encore mieux conductrices. Ces conducteurs sont recouverts, sauf à leur extrémité, par un gainage isolant, respectivement 25 et 26, réalisé de matière avec la partie principale 30, par exemple par surmoulage de matière plastique sur les conducteurs.

Les gainages isolants 25 et 26 remplissent principalement une fonction de maintien des conducteurs 23 et 24 des électrodes 21 et 22.

En effet, le diamètre des conducteurs est de l'ordre de 2 mm et leur longueur peut atteindre 126 mm selon les applications, et est fonction notamment de la forme du vase d'expansion du radiateur et de l'emplacement de montage du capteur sur celui-ci.

Les gainages isolants permettent ainsi d'empêcher que les conducteurs ne soient tordus lors du transport du capteur et des manipulations avant son montage sur le radiateur, ce qui pourrait interdire le montage du capteur, voire même provoquer un court-circuit entre les deux conducteurs.

La rigidité des électrodes 21 et 22 est encore renforcée par la présence d'une nervure centrale 27 réalisée de matière avec les gainages isolants 25 et 26 et avec la partie principale 30.

Or, il a été constaté qu'un capteur tel que celui représenté à la figure 1, une fois monté sur le radiateur de refroidissement d'un véhicule automobile, et en l'absence de tout défaut de fonctionnement du circuit électronique, ne fonctionne pas toujours de manière satisfaisante.

En particulier, lorsque le circuit de refroidissement du moteur est vidé de façon brutale, par exemple lorsqu'une durite se rompt ou se débranche, et que par conséquent l'extrémité des électrodes 21 et 22 n'est plus baignée dans le liquide, le voyant d'alerte sur le tableau de bord reste parfois éteint. Ceci est évidemment très dommageable puisque le conducteur, n'étant pas informé de ce que le circuit de refroidissement du moteur est défectueux, ne pourra pas stopper à temps son véhicule pour empêcher la destruction du moteur par élévation de sa température au delà d'une température de destruction.

Il semble que ce mauvais fonctionnement du capteur puisse être attribué à la formation d'une goutte de liquide, référencée 50 à la figure 1, entre les conducteurs 23 et 24 et les extrémités chanfreinées des gaines isolantes 25 et 26 des deux électrodes 21 et 22. En effet, une telle goutte maintient un contact électrique entre les conducteurs 23 et 24 malgré l'absence de liquide dans le radiateur.

Pour des raisons touchant à la place disponible pour monter le capteur sur la paroi 10 supérieure du vase d'expansion du radiateur, le trou pratiqué dans celle-ci ne présente qu'un diamètre D de 18 mm environ.

Ceci conduit à disposer les électrodes 21 et 22 de façon assez rapprochée. En effet, la distance d entre leurs axes respectifs n'est que de 6 mm environ.

Or, sachant que le liquide de refroidissement est en général composé d'un mélange d'eau, de glycol et d'alcool qui lui donne une structure visqueuse, on comprend qu'il est effectivement possible qu'une goutte de liquide 50 se forme entre les extrémités des électrodes lorsque le radiateur se vide brutalement.

La présente invention vise à pallier cet inconvénient de l'état de la technique.

En effet, l'invention concerne un capteur de niveau de liquide, notamment pour une installation de refroidissement du moteur d'un véhicule automobile, du type comportant au moins deux électrodes sensiblement parallèles destinées à pénétrer dans une cavité contenant du liquide en situation normale et ayant deux portions conductrices apparentes d'électrodes disposées sensiblement au même niveau, et un circuit électronique propre à faire circuler un signal électrique entre lesdites électrodes de manière à réaliser un capteur de continuité.

Selon l'invention, le capteur comporte des moyens anti-goutte propres à empêcher la rétention d'une ou plusieurs gouttes de liquide reliant les portions conductrices apparentes des électrodes.

Selon un premier mode de réalisation de l'invention, chaque électrode comprend une tige conductrice recouverte sauf à son extrémité apparente d'une gaine isolante de maintien, et la gaine isolante d'une première électrode est plus courte que celle de la seconde électrode de manière à fournir lesdits moyens anti-goutte.

Dans ce premier mode de réalisation, les tiges conductrices de la première et de la seconde électrodes peuvent être de la même longueur.

La partie apparente de la tige conductrice de ladite première électrode qui n'est pas recouverte par la gaine isolante peut être sensiblement deux fois plus longue que la partie correspondante de ladite seconde électrode.

En alternative, la tige conductrice de ladite première électrode peut être plus courte que la tige conductrice de ladite seconde électrode.

Selon un second mode de réalisation de la présente invention, chaque électrode comprend des tiges conductrices ayant des portions apparentes, et les portions conductrices apparentes sont disposées à l'écart l'une de l'autre et reliées l'une à l'autre par un matériau solide électriquement isolant formant une gaine isolante commune dont la surface externe est continue et généralement convexe, les concavités éventuelles de ladite surface externe ayant des dimensions suffisamment réduites et des espacements suffisamment grands pour éviter la rétention de gouttes de liquide jointives.

De préférence, la surface externe de la gaine commune est lisse, pour réduire l'adhérence du liquide, et elle peut avantageusement être cylindrique pour favoriser son évacuation.

Dans tous les modes de réalisation, les gaines isolantes peuvent avantageusement être réalisées de matière avec une partie principale formant boîtier du capteur, par surmoulage sur les tiges conductrices.

L'invention concerne également une installation de refroidissement du moteur thermique d'un véhicule automobile, comprenant un radiateur muni d'un vase d'expansion, qui se caractérise en ce qu'elle comprend un capteur de niveau tel que défini ci-dessus, notamment disposé dans ledit vase d'expansion, qui permet d'alerter le conducteur par l'intermédiaire d'un voyant lumineux sur le tableau de bord du véhicule, lorsque le niveau du liquide de refroidissement dans l'installation est insuffisant.

D'autres caractéristiques et avantages de la présente invention apparaîtront à la lecture de la description non limitative qui va suivre, en référence aux dessins annexés dans lesquels :
- la figure 1, déjà partiellement analysée, illustre schématiquement un capteur de niveau selon l'art antérieur ;
- la figure 2 et la figure 3 illustrent, en vue de face et en vue de côté, un capteur de niveau selon un premier mode de réalisation de l'invention ;
- les figures 4, 5, 6, 7 et 8 illustrent, respectivement en vue de face, en vue de côté, en coupe A-A, en coupe B-B et en perspective, la partie plongeante d'un capteur selon un second mode de réalisation de la présente invention ; et
- la figure 9 illustre, en perspective, la partie plongeante d'un capteur à deux niveaux selon le second mode de réalisation de la présente invention.

Sur la figure 1, on a représenté un capteur de niveau selon l'art antérieur, en détaillant les moyens de montage et de fixation du capteur sur la paroi 10 du vase d'expansion du radiateur. Ces moyens sont représentés sous forme d'une coupe partielle de la partie du capteur comprise entre la partie principale 30 et les électrodes 21 et 22.

La paroi 10 du vase d'expansion du radiateur de refroidissement comporte un trou étagé pour passage et fixation du capteur selon un montage de type baïonnette. Ce trou comporte, du côté de la face externe de la paroi 10, une portion d'alésage de forme cylindrique, et, du côté de la face interne de la paroi 10, une portion d'alésage de forme globalement rectangulaire.

Les moyens de montage et de fixation du capteur sur la paroi 10 comprennent, en partant de la partie principale 30 formant boîtier du capteur :
- une gorge annulaire 41 dont le flanc supérieur 46 se raccorde à la partie principale 30 formant boîtier du capteur et dont le flanc inférieur 47 est chanfreiné pour permettre le montage d'un joint torique 45 ;
- une portion cylindrique 43 comportant deux méplats non visibles sur la figure 1, et dont la plus grande dimension ne dépasse pas la plus petite dimension de la portion d'alésage de forme globalement rectangulaire du trou étagé de la paroi 10 ;
- et un épaulement chanfreiné 44 prolongeant ladite portion cylindrique, comprenant deux pattes radiales propres à coopérer avec la surface interne de la paroi 10.

Ces moyens permettent de réaliser un montage étanche du capteur sur le vase d'expansion, et ne font pas en eux-mêmes l'objet de l'invention.

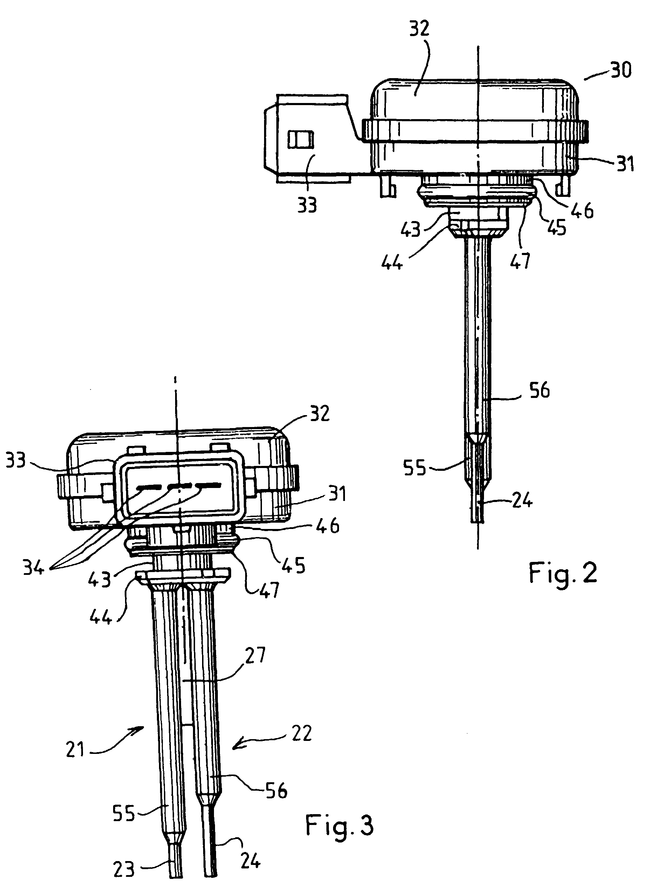

Aux figures 2 et 3, sur lesquelles les mêmes éléments qu'à la figure 1 portent les mêmes références, on a représenté un capteur selon un premier mode de réalisation de l'invention. La figure 2 est par exemple une vue de face et la figure 3 est par exemple une vue du côté gauche.

La partie principale 30 formant boîtier du capteur comporte un demi-boîtier supérieur 32 et un demi-boîtier inférieur 31 prolongé radialement par une partie 33 formant connecteur pour liaison vers l'extérieur du circuit électronique placé dans le capteur, via un connecteur complémentaire et un faisceau de câbles non représentés. La partie 33 formant le connecteur comporte à cet effet au moins trois broches de connexion 34, dont la première est destinée à être reliée à la masse du véhicule, la deuxième à la tension d'alimentation de la batterie, et la troisième à une première borne d'une lampe témoin disposée sur le tableau de bord du véhicule et dont la seconde borne est reliée à la masse.

Le circuit électronique placé à l'intérieur de la partie principale 30 formant boitier du capteur comporte des moyens, tels qu'un oscillateur de tension, pour générer un signal alternatif entre les deux conducteurs 23 et 24 auxquels ces moyens sont connectés, et pour détecter le passage ou le non passage de ce signal entre les conducteurs 23 et 24 via le liquide de refroidissement. Un signal alternatif permet de s'affranchir des problèmes d'électrolyse du liquide parcouru par ledit signal.

En cas de détection d'une non continuité électrique entre les deux conducteurs 23 et 24, une tension continue est générée sur la troisième broche de connexion du connecteur 33 pour allumer la lampe témoin.

Conformément au principe de l'invention, le capteur comporte des moyens anti-goutte pour empêcher la rétention d'une ou plusieurs gouttes de liquide entre les extrémités apparentes conductrices des électrodes, notamment lorsque le circuit de refroidissement se vide brutalement.

Dans ce premier mode de réalisation, ces moyens anti-goutte sont réalisés de la façon qui est exposée ci-après. Chaque électrode 21, respectivement 22, comprend une tige conductrice 23, respectivement 24, recouverte, sauf à son extrémité apparente, d'une gaine isolante de maintien 55, respectivement 56, la gaine isolante de la première électrode 22 étant plus courte que celle de la seconde électrode 21.

Selon une première adaptation de ce mode de réalisation, représentée à la figure 2, les tiges conductrices de la première et de la seconde électrodes sont de la même longueur. Préférentiellement, la partie apparente de la tige conductrice 24 de l'électrode 22 qui n'est pas recouverte par la gaine isolante 56 est alors sensiblement deux fois plus longue que la partie correspondante de l'électrode 21.

Selon une autre adaptation de ce mode de réalisation, non représentée sur les figures, la tige conductrice 24 de l'électrode 22 est plus courte que la tige conductrice 23 de l'électrode 21. Dans ce cas, la partie apparente de la tige conductrice 24 de l'électrode 22 qui n'est pas recouverte de la gaine isolante 56, et la partie apparente correspondante de la tige conductrice 23 de l'électrode 21, sont préférentiellement de même longueur.

Dans tous les cas, les extrémités biseautées des gainages 55 et 56 ne se trouvant pas dans le même plan horizontal, elles n'offrent pas de prise pour la formation d'une goutte de liquide entre les tiges conductrices 23 et 24. En effet, lorsque le circuit de refroidissement se vide, y compris lorsqu'il se vide brutalement, le liquide glisse tout d'abord le long des gaines isolantes 55 et 56, puis le long de la gaine isolante 55 et de la tige conductrice 24, et enfin le long des tiges conductrices 23 et 24, sans qu'à aucun endroit ne risque de se former et de se maintenir une goutte de liquide susceptible de court-circuiter les deux tiges conductrices.

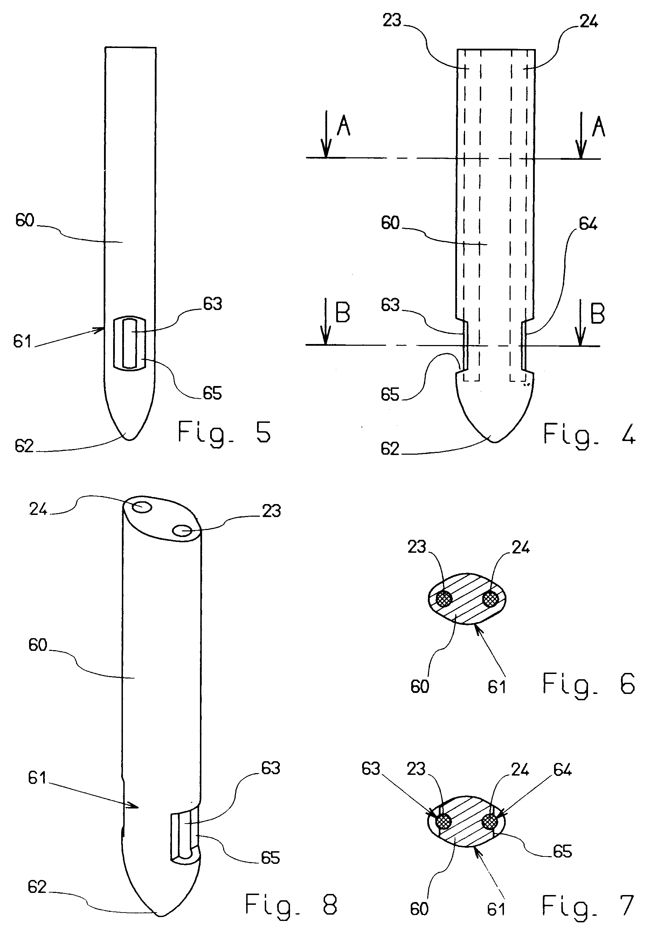

Les figures 4 à 8 illustrent la partie plongeante d'un capteur selon un second mode de réalisation de l'invention.

Cette partie plongeante de capteur est destinée à se raccorder à une partie principale de capteur similaire de celle des modes de réalisation des figures 1 à 3, la partie principale 30 assurant le montage étanche sur une paroi de vase d'expansion et contenant le circuit électronique interne au capteur.

Dans ce second mode de réalisation, on retrouve deux électrodes comprenant deux tiges conductrices 23 et 24 généralement parallèles. Les tiges conductrices 23 et 24 comportent des portions conductrices apparentes, respectivement 63 et 64, disposées à l'écart l'une de l'autre et reliées l'une à l'autre par un matériau solide électriquement isolant formant une gaine isolante commune 60.

La surface externe 61 de la gaine isolante commune 60 est continue et généralement convexe. Les concavités éventuelles de cette surface externe 61 doivent avoir des dimensions suffisamment réduites et des espacements suffisamment grands les séparant les unes par rapport aux autres pour éviter la rétention de gouttes de liquide jointives pouvant assurer une continuité électrique entre les portions conductrices apparentes 63 et 64 lorsque le niveau de liquide de refroidissement est descendu au dessous du niveau occupé par les portions conductrices apparentes 63 et 64. Ainsi, la gaine isolante commune 60 à surface externe 61 continue et généralement convexe constitue le moyen anti-goutte dans ce second mode de réalisation. Ce moyen est particulièrement efficace, et procure une grande fiabilité de fonctionnement.

De préférence, la surface externe 61 de la gaine commune 60 est lisse, pour réduire l'adhérence du liquide.

Les figures 4 à 8 illustrent ce mode de réalisation en vue de face sur la figure 4, en vue de côté droit sur la figure 5, en coupe transversale selon le plan A-A sur la figure 6, en coupe transversale selon le plan B-B sur la figure 7, et en perspective sur la figure 8. On notera que les portions conductrices apparentes 63 et 64 sont des portions de surface cylindrique extérieure des deux tiges conductrices 23 et 24 cylindriques. Les portions conductrices apparentes 63 et 64 sont orientées dans des directions respectives non convergentes, avantageusement dans des directions opposées.

Dans la réalisation illustrée, la surface externe 61 de la gaine commune 60 est généralement cylindrique, c'est-à-dire formée par des génératrices restant parallèles à l'axe commun des tiges conductrices 23 et 24. En section transversale, illustrée sur les figures 6 et 7, la partie plongeante de capteur peut avoir une forme générale de losange à sommets arrondis.

Les bords de chacune des portions conductrices apparentes 63 et 64 se raccordent à la surface externe 61 de la gaine commune 60 par une paroi périphérique 65 évasée, comme illustré sur les figures, favorisant l'écoulement du liquide de refroidissement lors de sa baisse de niveau.

La surface externe 61 de la gaine commune 60 forme une extrémité 62 convexe isolante de partie plongeante du capteur. Les portions conductrices apparentes 63 et 64 restent à l'écart de ladite extrémité 62 convexe isolante. De cette façon, lorsque la partie plongeante de capteur est disposée en orientation sensiblement verticale, le liquide de refroidissement, en baissant de niveau, quitte le contact avec les portions conductrices apparentes 63 et 64 bien avant de quitter le contact avec la surface externe 61 de la gaine commune 60 formant l'extrémité 62 de partie plongeante du capteur.

Les gaines isolantes 55, 56 et 60 respectives, dans les deux modes de réalisation, peuvent avantageusement être réalisées de matière avec la partie principale 30 formant boîtier du capteur, par surmoulage sur les tiges conductrices 23 et 24 des électrodes. De même, la partie 33 formant connecteur peut être réalisée de matière avec ladite partie principale 30 lors de la même opération, par surmoulage sur les broches de connexion 34. Tous ces éléments peuvent être réalisés, en une matière plastique telle qu'un polyamide 66 (PA66).

L'invention concerne également une installation de refroidissement du moteur thermique d'un véhicule automobile, comprenant un radiateur muni d'un vase d'expansion. Un capteur de niveau tel que défini ci-dessus, est disposé par exemple dans ledit vase d'expansion, et permet d'alerter le conducteur par l'intermédiaire d'un voyant lumineux sur le tableau de bord du véhicule lorsque le niveau du liquide de refroidissement dans l'installation est insuffisant.

Le capteur selon l'invention a été décrit dans deux modes de réalisation particuliers mais non limitatifs. Notamment, le capteur peut comprendre plus de deux électrodes pour détecter une pluralité de niveaux de liquide, les moyens de l'invention Pour empêcher la formation d'une goutte d'eau entre les paires d'électrodes étant déclinés de façon adaptée.

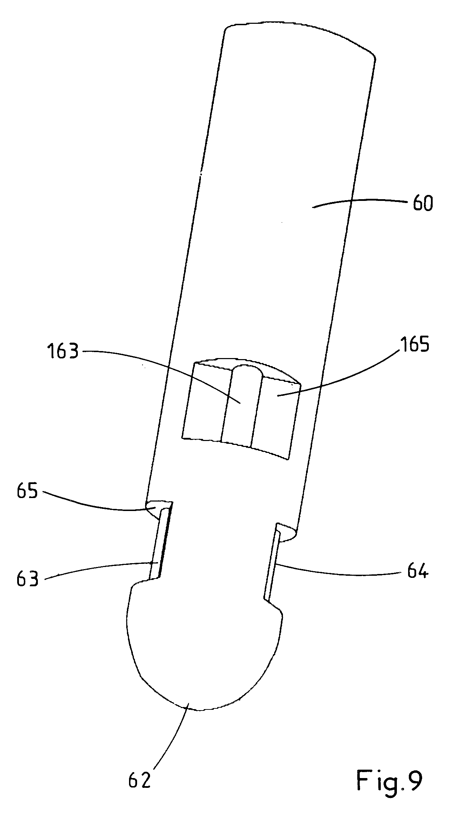

Par exemple, dans la variante du second mode de réalisation illustrée sur la figure 9, on prévoit un capteur ayant quatre électrodes sensiblement parallèles, deux premières électrodes étant opposées l'une à l'autre, par exemple à deux premiers sommets opposés de la section transversale en losange, et ayant deux premières portions conductrices apparentes 63 et 64 situées selon un premier niveau, deux secondes électrodes étant décalées angulairement par rapport aux premières électrodes et opposées l'une à l'autre, par exemple aux deux autres sommets de la section transversale en losange, et ayant deux secondes portions conductrices apparentes similaires telles que la seconde portion conductrice apparente 163, situées à un second niveau différent du premier niveau. On réalise ainsi un capteur à deux niveaux, les deux premières électrodes pouvant générer un premier signal électrique lorsque le liquide atteint le premier niveau, les deux secondes électrodes pouvant générer un second signal électrique lorsque le liquide atteint le second niveau.

Les électrodes peuvent plonger sensiblement verticalement dans une cavité comme le vase d'expansion du radiateur de refroidissement du moteur d'un véhicule automobile. Mais il est bien évident que d'autres applications sont envisageables, dans lesquelles les électrodes sont orientées non verticalement, notamment avec le second mode de réalisation.

La présente invention n'est pas limitée aux modes de réalisation qui ont été explicitement décrits, mais elle en inclut les diverses variantes et généralisations contenues dans le domaine des revendications ci-après.

## Revendications

1. Capteur de niveau de liquide, notamment pour une installation de refroidissement du moteur d'un véhicule automobile, du type comportant au moins deux électrodes (21, 22) sensiblement parallèles destinées à pénétrer dans une cavité contenant du liquide en situation normale en ayant deux portions conductrices apparentes d'électrodes (21, 22) disposées sensiblement au même niveau, et un circuit électronique propre à faire circuler un signal électrique entre lesdites électrodes de manière à réaliser un capteur de continuité, caractérisé en ce qu'il comporte des moyens anti-goutte propres à empêcher la rétention d'une ou plusieurs gouttes de liquide (50) reliant les portions conductrices apparentes des électrodes (21, 22).

2. Capteur selon la revendication 1, dans lequel chaque électrode (21, 22) comprend une tige conductrice (23, 24) recouverte sauf à son extrémité apparente d'une gaine isolante de maintien (55, 56), caractérisé en ce que la gaine isolante (56) d'une première électrode (22) est plus courte que celle (55) de la seconde électrode (21) de manière à fournir lesdits moyens anti-goutte.

3. Capteur selon la revendication 2, caractérisé en ce que les tiges conductrices (23, 24) de la première (22) et de la seconde (21) électrodes sont de la même longueur.

4. Capteur selon la revendication 3, caractérisé en ce que la partie apparente de la tige conductrice (24) de ladite première électrode (22) qui n'est pas recouverte par la gaine isolante (56) est sensiblement deux fois plus longue que la partie correspondante de ladite seconde électrode (21).

5. Capteur selon la revendication 1, caractérisé en ce que les électrodes (21, 22) comprennent des tiges conductrices (23, 24) ayant des portions conductrices apparentes (63, 64) disposées à l'écart l'une de l'autre et reliées l'une à l'autre par un matériau solide électriquement isolant formant une gaine isolante commune (60) dont la surface externe (61) est continue et généralement convexe, les concavités éventuelles de ladite surface externe (61) ayant des dimensions suffisamment réduites et des espacements suffisamment grands pour éviter la rétention de gouttes de liquide jointives.

6. Capteur selon la revendication 5, caractérisé en ce que la surface externe (61) de la gaine commune (60) est lisse, pour réduire l'adhérence du liquide.

7. Capteur selon l'une des revendications 5 ou 6, caractérisé en ce que les portions conductrices apparentes (63, 64) sont orientées dans des directions respectives non convergentes, avantageusement dans des directions opposées.

8. Capteur selon l'une quelconque des revendications 5 à 7, caractérisé en ce que la surface externe (61) de la gaine commune (60) est généralement cylindrique.

9. Capteur selon l'une quelconque des revendications 5 à 8, caractérisé en ce que la surface externe (61) de la gaine commune (60) forme une extrémité (62) convexe isolante de partie plongeante du capteur, les portions conductrices apparentes (63, 64) étant à l'écart de ladite extrémité (62) convexe isolante.

10. Capteur selon l'une quelconque des revendications 5 à 8, caractérisé en ce qu'il comprend quatre électrodes sensiblement parallèles, deux premières électrodes étant opposées l'une à l'autre et ayant deux premières portions conductrices apparentes (63, 64) situées selon un premier niveau, deux secondes électrodes étant opposées l'une à l'autre et ayant deux secondes portions conductrices apparentes (163) situées à un second niveau différent du premier niveau, pour constituer un capteur à deux niveaux.

11. Capteur selon l'une quelconque des revendications 2 à 10, caractérisé en ce que les gaines isolantes (55, 56) sont réalisées de matière avec une partie principale (30) formant boîtier du capteur, par surmoulage sur les tiges conductrices (24, 23).

12. Installation de refroidissement du moteur thermique d'un véhicule automobile, comprenant un radiateur muni d'un vase d'expansion, caractérisé en ce qu'elle comprend un capteur de niveau selon l'une quelconque des revendications précédentes, notamment disposé dans ledit vase d'expansion.
